Europäisches Patentamt

European Patent Office

Office européen des brevets

Publication number: **0 285 053**
**A2**

# EUROPEAN PATENT APPLICATION

(21) Application number: 88104943.1

(22) Date of filing: 28.03.88

(51) Int. Cl.⁴ **G01D 5/34** , G01D 5/26

(30) Priority: 30.03.87 US 32290

(43) Date of publication of application:
05.10.88 Bulletin 88/40

(84) Designated Contracting States:
DE FR IT NL SE

(71) Applicant: KOLLMORGEN CORPORATION
10 Mill Pond Lane
Simsbury, CT 06070(US)

(72) Inventor: Park, Eric D.
P.O. Box 894 Rt 3
Blacksburg, VA 24060(US)

(74) Representative: Königseder, geb. Egerer,
Claudia
Zugspitzstrasse 65
D-8104 Grainau(DE)

(54) Fiber optic sensing system and method across working air gap of an electric motor.

(57) An optical sensing system and method for sensing across the working air gap of an electric motor is described. The sensing system (10) includes a light source (12) to provide optical energy, source fiber optic means (14) to transmit the optical energy to an optical head (16) mounted at the air gap (18), a code pattern (26) mounted on the motor rotor to modulate the optical energy, return fiber optic means (22) to transmit the modulated optical energy to one or more detectors (24), and information processing and motor control electronics (25) to analyze data from detectors (24) and control the motor based thereon. Multi-channel information sensing with multiplexing is also disclosed.

FIG. 1

# FIBER OPTIC SENSING SYSTEM AND METHOD ACROSS WORKING AIR GAP OF AN ELECTRIC MOTOR

The invention relates to optical sensing across the working air gap of electric motors using fiber optic techniques.

Motion control systems utilizing electric motors typically require some form of sensor to measure position, speed, acceleration, torque etc. In many cases, such sensor-generated information is used in a closed-loop system to control the motor, e.g., of the synchron brushless DC type.

Heretofore, generally used sensors involve devices separate from the motor itself which require mounting and coupling to the motion system, such as by coupling to the motor drive shaft.

For example, if it is necessary to run a motor at a constant speed, an electromagnetic tachometer may be mounted on the motor output shaft with constant feedback of motor speed information to the motor controller. However, the tachometer typically includes a copper wire wound stator, a permanent magnet rotor, a brush assembly and a coupling device, all of which undesirably add considerable mass to the drive package, increase the size and axial length of the system, and increase the rotational inertia od the motion drive system. As a further example, rotational position may be a parameter of interest. Prior art optical encoders mounted on the motor drive shaft are dependent upon the compliance of the shaft coupling. Shaft compliance is known to cause dropped or added encoder counts, which introduces inaccuracies into the position control system. As with other shaft-mounted sensors, this type of optical encoder undesirably adds size, weight and rotational inertia to the drive system.

In many drive applications, size, weight and inertia are critical. For example, in many aircraft applications any additional size and weight added to a motor package is highly significant. Even minor savings in size or weight can determine whether other equipment will be included in the aircraft. Significantly, a few centimeters and/or grams saved in one or more aircraft motion systems may permit incorporation of additional pilot aids.

Electric motors necessarily include a working air gap or fluid gap (hereinafter referred to as the "working air gap") between the rotor and the stator. Should it be possible to provide a small, lightweight sensor apparatus which can be disposed in or across the working air gap of the motor and which can provide the necessary information to the motor control electronics concerning position, speed, acceleration, torque etc., a significant advance will have been made in the motor control art.

Therefore, an object of the invention is to provide an optical system for measuring drive system parameters, e.g., position, speed, acceleration, torque etc., across the working air gap of an electric motor.

Another object of the invention is to provide an optical sensing system across the working air gap of an electric motor without substantially increasing the size, weight, length, and/or rotational inertia of the motor drive package.

A further object of the invention is to provide a sensing system which can provide information as to any parameter of interest which is determinable from a digital code pattern using fiber optic techniques.

The system and method according to the invention provide a light-weight, compact optical sensing system across the working air gap of a motor to provide information necessary to determine parameters of interest, e.g., position, speed, acceleration, torque etc., said system comprising a light source to provide optical energy; code pattern means disposed in the working air gap of the motor to modulate said optical energy; source fiber optic means for transmitting said optical energy from said light source to said code pattern means, the emitting tip of said source fiber optic means being disposed across said working air gap from said code pattern means; detector means for detecting said optical energy modulated by said code pattern means; return fiber optic means having a receiving tip disposed across the working air gap from said code pattern means to receive said modulated optical energy from said code pattern means, said return fiber optic means being configured and dimensioned to transmit said modulated optical energy to said detector means, whereby said detector means is activated by said modulated optical energy.

Advantageously, the system of the invention does not require narrow tolerance mechanical coupling to the drive shaft.

In accordance with the invention, optical energy (hereinafter referred to as "light", although the energy need not to be in the visible portion of the spectrum) from a light source is transmitted to an optical head associated with one of the motor members which defines the working air gap, i.e., either the stator or the rotor, through one or more optical fibers. At the optical head the light traverses the working air gap and is incident upon a code pattern associated with the other motor member. The light is modulated in a detectable fashion by the code pattern and returned to a detector through a return optical fiber. The detector signal indicating the presence of the modulated light is then used to determine and display the parameter of interest and to control motor operation, in a closed-loop control system, and of the drive system. Information for determining various parameters of interest, e.g., speed, position, etc., can be generated by varying the number and complexity of information channels of the code pattern.

In a first embodiment of the invention, motor speed can be determined using only one digital code pattern channel. Light is transmitted to the working air gap through a single source fiber which terminates in an optical head mounted on the motor stator. A single code pattern channel consisting of a ring of evenly spaced reflective and non-reflective surface portions is provided on the rotor across the working air gap from the optical head. Light from the optical head traverses the working air gap and is incident upon the code pattern, where the light is modulated by the reflective and non-reflective portions of the code pattern surface. Light reflected from the reflective surface portions enters a return optical fiber at the optical head and is transmitted to a detector. As the motor shaft and rotor spin, the detector is activated during each pass of a reflective surface portion of the code pattern. Electrical circuitry having a time clock is provided to count the number of passes of reflective surface portions detected per unit time. Given the direct relationship between distance of rotor travel and the number of code pattern "counts" detected per unit time speed, i.e., revolutions per unit time, can be readily determined.

In a second embodiment, an incremental position detector is provided. One channel of a multi-channel code pattern indicates when the rotor has reached a designated base or "zero" point of one complete rotation. One or more digital channels of further incremental position information are also provided to indicate the partial rotational position of the rotor within each rotation. Naturally, the degree of accuracy of the incremental position indicator is directly dependent upon the number of further digital channels provided on the code pattern, which determines the number of "bits" of incremental position information which can be generated.

In use, the incremental position indicator detects each pass of the base or zero point. Thereafter, as the rotor completes its rotation, the incremental position of the rotor is detected from the other code pattern channels. Of course, the base point channel can be used to monitor the total number of full rotations and any one of the channels can simultaneously be used to monitor rotor speed.

A third embodiment of the invention provides an absolute position indicator. A number of code pattern information channels are provided so that each rotor position has its own unique position code without regard to a base or zero point. Absolute position encoding is preferred where instant position information is necessary, such as in critical aircraft control systems.

In all embodiments of the invention where multi-channel code patterns are used dedicated source and return fibers can be provided for each code pattern channel of information. Alternatively, multiplexing techniques can be used so that only a single source fiber and a single return fiber are required to transmit light to and from the optical head. The latter alternative is particularly useful where space limitations are in consideration.

Advantageously, the optical sensing system according to the invention does not appreciably increase the size, weight or rotational inertia of the drive system. In addition, the present optical sensing system does not require any structure externally mounted to the motor drive shaft which would require close mechanical tolerances to the shaft position.

The accompanying drawings illustrate preferred embodiments of the system of the invention.

Fig. 1 is an optical schematic diagram of a single channel optical sensing system in accordance with the invention.

Fig. 2 is a partial cross-sectional view of a motor-mounted three channel optical sensing system in accordance with the invention.

Fig. 3 is a partial plan view of a three channel code pattern useful with the invention.

Fig. 4 is an optical schematic diagram of a ten channel optical sensing system in accordance with the invention.

Fig. 5 is an optical schematic diagram of a ten channel optical sensing system in accordance with the invention utilizing signal multiplexing techniques.

Fig. 6 is a perspective view of an optical head for aligning the source and return optical fibers with the code pattern.

In the drawings of the preferred embodiments, there is shown an optical sensing system 10 for sensing across the working air gap 18 of an electric motor. Optical energy ("light") is emitted by light source 12 and coupled into source optical fiber 14, where the light is transmitted to an optical head 16 mounted at the working air gap 18, as by being mounted in place of a tooth of the motor stator 20. The working air gap 18 may form part of either a rotary or linear motor. The light traverses working air gap 18 and is modulated by one or more information channels of a code pattern 26 associated with the motor rotor 28. Light modulated by any given channel of code pattern 26 enters return optical fiber 22 at optical head 16 and is transmitted to a detector 24, which is activated by the modulated light to produce an electrical signal indicating detection of the light modulated by that channel. The electrical signals are processed in a known manner by electronics module 25 to provide information corresponding to the parameter of interest.

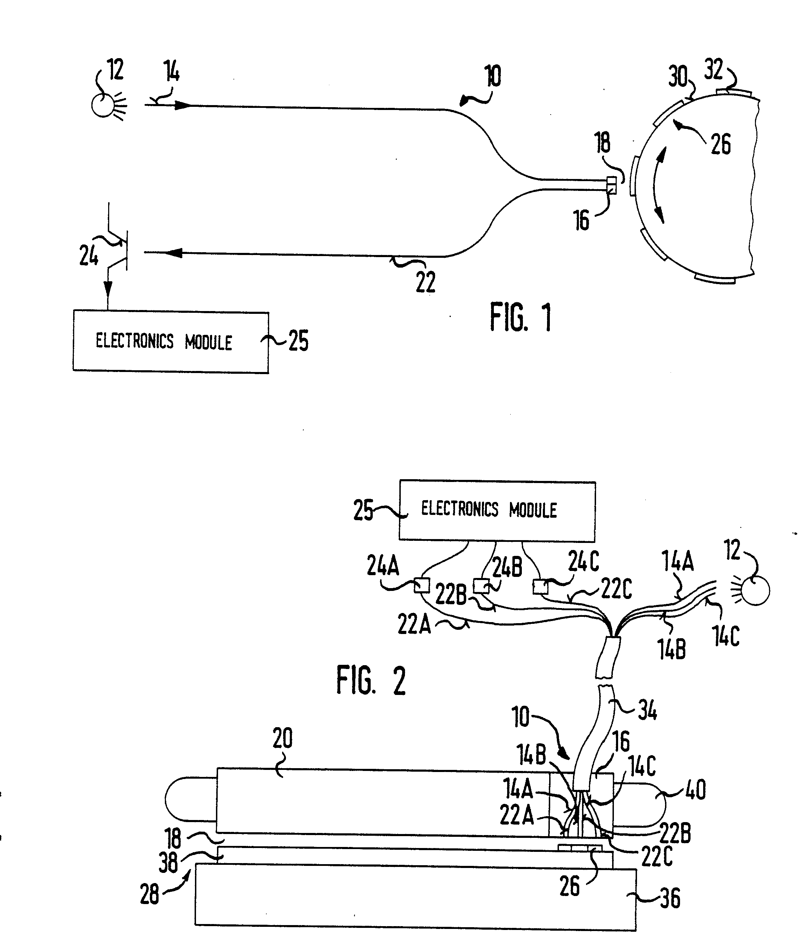

Referring more particularly to Fig. 1, light from light source 12 is coupled into and transmitted by source fiber 14 to optical head 16, where the light traverses the motor working air gap 18 and is incident upon code pattern 26, shown as a circumferential band which may be wrapped around a portion of the motor rotor. As shown, code pattern 26 consists of evenly spaced alternating reflective surface portions 30 and non-reflective surface portions 32 which modulate incident light in an ON-OFF reflective/non-reflective pattern. Light reflected from code pattern 26 and, more particularly, reflective surface portions 30, is coupled into return fiber 22 at optical head 16. At the output end of return fiber 22 the returning reflected light is incident upon and activates a detector 24. It will be appreciated that although reference is made herein to "reflected" modulated light, such reference should not be construed as a limitation upon this invention, since other systems such as transmissive systems, are also contemplated. In addition, it is contemplated that all fiber optic light couplings discussed herein can be enhanced with graded index lenses, commonly known as "GRIN" lenses, in a known manner.

By way of example only, a single channel system such as the single channel reflective/non-reflective system illustrated in Fig. 1 can be used to determine motor speed. Thus, the output of detector 24 can be fed to a computer having a time clock so that, as the motor rotor travels or turns, the number of electrical pulses corresponding to reflection counts detected by the detector 24 are monitored against the time clock. Since the number of detector pulses correlates directly to distance travelled in a linear motor or revolutions in a rotary motor, it is a relatively simple matter to translate the number of detector signals into speed information, i.e., distance per unit time or revolutions per unit time. This speed information may then be used or displayed for drive system control.

Depending upon the particular application, multiple code pattern channels can be provided, as illustrated in Fig. 2 to 5. In this manner, sufficiently detailed information can be generated to determine numerous parameters of interest, including but not limited to relative position, incremental position or absolute position.

For example, the fiber optic sensing system of the in vention may be used to determine the relative position of the motor rotor within a single rotor rotation. Such a relative position indicator may find application in the commutation system of a brushless DC motor, where true position information is not needed. Indeed, for motor commutation it is only necessary to determine the relative position of the permanent magnets vis à vis the motor phase windings. A sensing system in accordance with the invention for motor commutation merely requires one information channel for each motor phase, i.e., three channels for a three-phase motor.

In an incremental position detector according to the invention one channel of a multi-channel code pattern would be used to indicate the base or "zero" point of each revolution of the motor rotor and shaft. Other channels provide information to indicate the position of the rotor within less than one full rotation. The resolution of the incremental position measurement increases as the number of counts per channel is increased, so the resolution required will dictate the number of reflective regions per revolution.

The system of the invention is particularly useful as an absolute position encoder. Absolute position encoders are preferred where instantaneous position information is required. For example, where the motor drive at issue controls an aileron of a jet aircraft and a momentary power loss occurs, it may be crucial for the system position and, hence, the aileron position to be immediately determinable upon a resumption of power. Under these circumstances, an incremental encoder would be unsatisfactory since the rotor would have to return to the zero point before the true aileron position could be determined. Simply put, there is insufficient time for such delays during high speed flight. Even a momentary delay in determining a crucial parameter such as aileron position can mean the difference between resumed control of the aircraft and a fatal crash.

Generally speaking, the discussion below of multi-channel optical sensing systems finds application in both incremental and absolute position encoders. In addition, optical sensing across the working air gap of an electric motor, as disclosed herein, may find application in the determination of other information parameters not specifically discussed herein.

Referring to Fig. 2, light from light source 12 is coupled into source fibers 14A, 14B and 14C. Source fibers 14A, 14B and 14C and return fibers 22A, 22B and 22C may be bundled into a single cable 34 leading to optical head 16, which is shown mounted in place of one tooth of the motor stator 20. Within optical head 16 each pair of source and return fibers 14A to 22A, 14B to 22B, 14C to 22C is separately directed to the optical head face plate at a point opposite a corresponding channel of code pattern 26 across the motor working air gap 18. For simplicity, only a three channel system is illustrated. The channels may consist simply of reflective/non-reflective surface portions of a circumferential band mounted over a portion of rotor 28. Each channel of code pattern 26 is illuminated and the reflected light, if any, is coupled into the return fibers 22A, 22B, 22C and transmitted to the detectors 24A, 24B, 24C. The detector signals are fed to electronics module 25 for processing, display and/or system control in accordance with known techniques.

Although code pattern 26 is shown in Fig. 2 disposed on a ring over a portion of the motor magnets 38, it is also contemplated that the code pattern could be disposed over an extended portion of the rotor back iron 36 with the optical head positioned under the motor winding end turns 40.

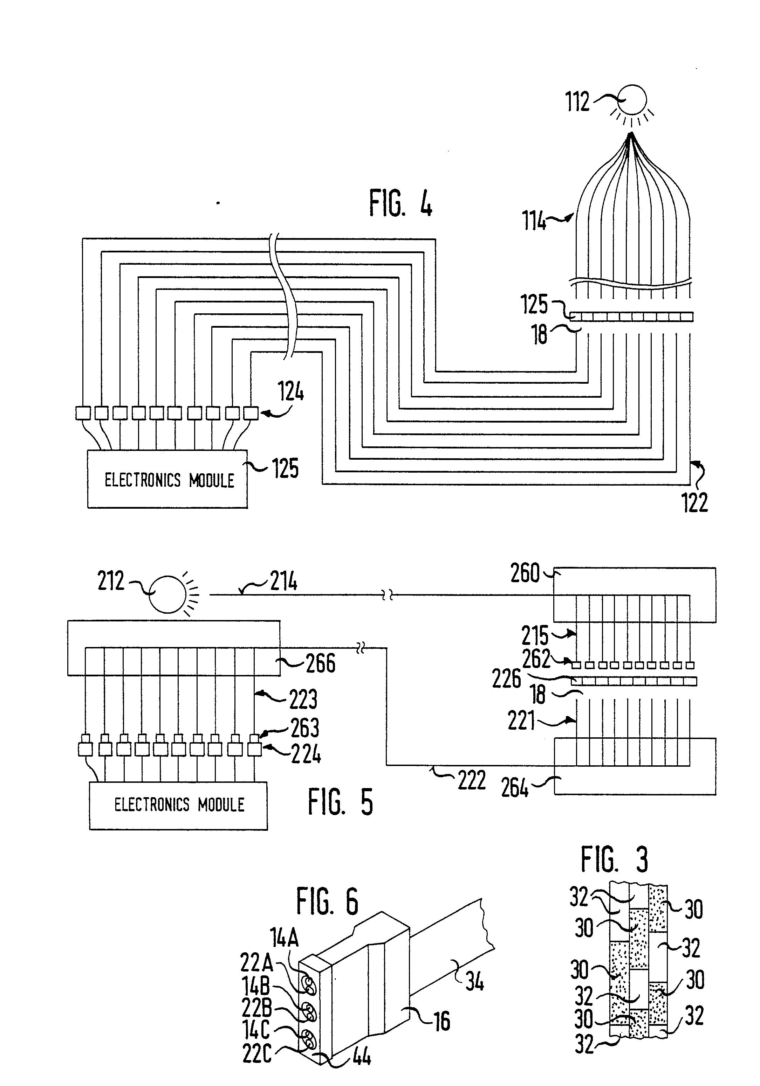

The term "optical head" is used herein as a convenient reference to any structure appropriate for reliably se curing the source and return fiber tips to the motor accurately positioned across working air gap 18 from the corresponding information channel of code pattern 26. As shown in Fig. 6, optical head 16 may consist of a plug type structure which may be conveniently inserted into a receiving slot in the motor stator (see Fig. 2). As shown in Fig. 6, cable 34 terminates at optical head 16 and the source and return fiber pairs 14A-22A, 14B-22B, 14C-22C terminate at an optical head face plate 44 which assures alignment with the code pattern channels across the working air gap.

A partial plan view of a three channel reflective code pattern is shown in Fig. 3. For each information channel reflective surface portions 30 and non-reflective surface portions 32 create a unique position code, be it incremental or absolute, consisting of a series of binary ON/OFF bits of information.

Increasingly accurate position information in an absolute encoder can be provided by including additional information channels, such as the ten channel system shown in the optical schematic diagram of Fig. 4. As shown there, light from source 112 or,alternatively, ten dedicated light emitting diodes (LEDs) or other appropriate energy sources, is coupled into ten dedicated light source fibers 114. Each source fiber 114 is coupled to and illuminates a particular information channel of the ten channel code pattern 126, shown for clarity in Fig. 4 as a transmissive modulator. Modulated light from each code pattern channel is coupled into dedicated return fibers 122 which transmit the modulated light to ten detectors 124. The electrical signals from detectors 124 are fed to electronics module 125 for processing, display and/or system control. The ten channel system permits accurate position information to be developed since many "bits" of information are provided.

Where space, size and/or weight limitations are of concern, the number of individual source and return fibers connecting the sensing zone at working air gap 18 and either light source 112 or the detector electronics module package in a multiple channel system such as shown in Fig. 4 may be reduced by multiplexing techniques. For example, the multiple channel optical signals may be multiplexed into a single source and a single return fiber between the sensing zone and both the emitting and detecting electronics, as shown in Fig. 5. One appropriate method and apparatus for wavelength multiplexing optical signals is discussed below and disclosed in co-pending application

As shown in Fig. 5, light from light source 212 is coupled into source fiber 214 and transmitted to an optical splitter 260, where the light is divided among dedicated channel source fibers 215. Optical splitter 260 may, for example, be a fused optical coupling. In the ten channel system of Fig. 5, this would require a one to ten fused coupling wherein one source fiber is fuse-coupled to ten channel source fibers. In general, for a system having N channels of information a one to N coupling would be required.

Each channel source fiber 215 projects the light through a source filter 262 to one channel of code pattern 226, shown in Fig. 5 as a transmissive modulator. Preferably, the channel source filters 262 are narrow-band filter which permit only light within a select wavelength range to reach the particular information channel of code pattern 226. In this manner, each code pattern modulates light only within a distinct, narrow wavelength band. Light from each information channel of code pattern 226, as modulated at various wavelengths, is received by and coupled into dedicated channel return fibers 221 which are coupled by an optical mixer 264 into a single return fiber 222. As in the case of optical splitter 260, optical mixer 264 may be a ten to one fused coupling wherein light from all ten channel return fibers is fed into the single return fiber 222.

Prior to reaching detectors 224 light from return fiber 222 is divided by a second optical splitter 266, such as another one to ten fused coupling, into ten dedicated detector fibers 223. Light from the detector fibers 223 passes through and is decoded by a second set of narrow-band detector filters 263 corresponding to detector filters 262 and is incident upon a series of detectors 224. In this manner, each detector 224 receives and detects only light corresponding to one information channel.

In this embodiment, each code pattern channel modulates only light within a distinct light waveband and each detector receives and detects only modulated light corresponding to one of the information channels. Remarkably, however, all modulated signals can be multiplexed without interference through a single return fiber since each waveband can be decoded by filtration prior to detection.

In use, the system and method of the invention advantageously provide digital information for calculating various motor parameters such as speed, position, etc. by optical sensing across the working air gap of a motor. Light source 12, 112, 212, which may be a broadband light source or a number of individual LEDs, is activated to provide light to the source fibers 14, 114, 214. The source fiber may consist of one fiber 14 in a single channel system. In a multi-channel system, the source fibers may either be a bundle of dedicated fibers 114, one for each channel of information, or a single trunk source fiber 214 which is split by a first optical splitter 260 at or near the optical head into dedicated channel source fibers 215. Light delivered to the working air gap 18 is modulated by each channel of code pattern 26, 126, 226 and transmitted via either dedicated return optical fibers 22,122 or a single trunk return fiber 222 to corresponding detectors 24, 124, 224 for each information channel. Where the return beam is coupled into single source and/or return fibers 214, 222 appropriate multiplexing techniques, such as wavelength multiplexing, are used. This may involve 1:N optical splitting and N:1 optical mixing, as by fused optical couplings, where N is the number of information channels in the system.

It will be readily appreciated that the invention makes use of the heretofore unused working air gap of the motor in such a manner that vital information can be obtained without adding appreciable weight, length, size or inertia to the motor drive system. Furthermore, the sensing and signal transformation is completely insensitive to electrical or magnetical interference.

## Claims

1. A system for sensing in the working air gap of an electric motor, characterized in that it comprises
   -a light source to provide optical energy;
   -code pattern means disposed in the working air gap of the motor to modulate said optical energy;
   -source fiber optic means for transmitting said optical energy from said light source to said code pattern means, the emitting tip of said source fiber optic means being disposed across said working air gap from said code pattern means;
   -detector means for detecting said optical energy modulated by said code pattern means;
   -return fiber optic means having a receiving tip disposed across the working air gap from said code pattern means to receive said modulated optical energy from said code pattern means, said return fiber optic means being configured and dimensioned to transmit said modulated optical energy to said detector means, whereby said detector means is activated by said modulated optical energy.

2. The system of claim 1, characterized in that it further comprises motor control means for controlling the motor based upon said modulated optical energy detected by said detector means.

3. The system of claim 1, characterized in that said code pattern means further comprises a circumferential ring mounted over a portion of the motor rotor, said code pattern means bearing at least one information channel.

4. The system of claim 3, characterized in that said code pattern means provides motor rotor speed in formation.

5. The system of claim 3, characterized in that said code pattern means provides motor rotor position information.

6. The system of claim 3, characterized in that said code pattern means includes multiple information channels.

7. The system of claim 6, characterized in that said source fiber optic means and said return fiber optic means further comprise two sets of optical fibers equal in number to the number of said multiple information channels; and that said detector means further comprises multiple detectors equal in number to the number of said multiple information channels, whereby each of said multiple information channels is associated with a dedicated pair of source and return fibers and a detector.

8. The system of claim 6, characterized in that said detector means further comprises a series of detectors equal in number and corresponding to each of said multiple information channels.

9. The system of claim 6, characterized in that it further comprises means for multiplexing said modulated optical energy from each of said multiple channels to said detector means.

10. The system of claim 7, characterized in that it further comprises an optical head encapsulating said source emitting tip and said return fiber receiving tip for each said pair of dedicated source and return fibers, said optical head being disposed across said working air gap from said code pattern means such that each pair of dedicated source and return fibers is aligned with one of said information channels.

11. The system of claim 10, characterized in that said optical head is mounted on the motor stator.

12. The system of claim 6, characterized in that said information channels further comprise reflective and non-reflective surface portions on said circumferential ring.

13. A method of sensing across the working air gap of an electric motor comprising the steps of providing a light source for generating optical energy; providing source fiber optic means for transmitting said optical energy from said light source to the electric motor working air gap; providing code pattern means disposed across the working air gap from said source fiber optic means for receiving and modulating said optical energy; providing detector means for detecting optical energy modulated by said code pattern means; providing return fiber optic means for transmitting modulated optical energy from said code pattern means to said detector means; and activating said light source to transmit optical energy through said source fiber optic means and across the working air gap of the motor to said code pattern means, whereupon said optical energy is modulated by said code pattern means, said modulated light being transmitted by said return optical fiber means to said detector means for detection.

14. The method of claim 13, characterized in that said code pattern means consists of a circumferential ring around a portion of the motor rotor having reflective and non-reflective surface portions such that said optical energy is modulated by being reflected or not reflected by said reflective and non-reflective surface portions.

15. The method of claim 14, characterized in that it further comprises the step of controlling the motor based upon the information obtained from said detector.

16. The method of claim 14, characterized in that it further comprises the step of determining the position of the motor rotor based upon the reflected optical energy detected by said detector.

17. The method of claim 14, characterized in that it further comprises the step of determining the speed of the motor rotor based upon the reflected optical energy detected by said detector.

18. The method of claim 13, characterized in that it further comprises the step of providing optical head means for positioning the tip of said source fiber optic means and said return fiber optic means across the working air gap from and aligned with said code pattern means.

FIG. 1

FIG. 2

0 285 053

FIG. 4

FIG. 5

FIG. 3

FIG. 6

ELECTRONICS MODULE

ELECTRONICS MODULE